# EUROPÄISCHE PATENTSCHRIFT

(11) **EP 0 304 800 B1**
(45) Veröffentlichungstag und Bekanntmachung des Hinweises auf die Patenterteilung: **14.04.1993**
(21) Anmeldenummer: 88113415.9
(22) Anmeldetag: 18.08.1988
(51) Int. Cl.: G03B 21/132

(54) **Durchlicht-Schreibprojektor**
Overhead projector
Projecteur vertical

(30) Priorität: 24.08.1987 DE 3728191
(43) Veröffentlichungstag der Anmeldung: 01.03.1989
(73) Patentinhaber: ProCent Patent- und Verwaltungs AG, 8034 Zürich (CH)
(72) Erfinder: Behr, Karl-Günther, D-6301 Biebertal-Vetzberg (DE)
(74) Vertreter: Riecke, Manfred

(56) Entgegenhaltungen:
- DE-B- 1 153 915
- JP-A- 5 560 934
- US-A- 3 915 568
- US-A- 4 118 761
- PATENT ABSTRACTS OF JAPAN, Band 9, Nr. 37 (P-335)[1760], 16th February 1985; & JP-A-59 178 437

## Beschreibung

Die Erfindung betrifft den Beleuchtungsteil eines Durchlicht-Schreibprojektors.

Bei Durchlicht-Schreibprojektoren ist in bekannter Weise die Lichtquelle unterhalb der Schreibplatte angeordnet. Der Strahlengang verläuft von der Lichtquelle in aller Regel durch eine unterhalb der Schreibplatte angeordnete Fresnellinse, welche die Strahlen durch die Schreibvorlage hindurch in das Projektions-Objektiv fokussiert.

Um hierbei eine gleichmäßige Ausleuchtung der Schreibplatte zu erzielen, ist es erforderlich, daß die Lichtquelle ver hältnismäßig weit unterhalb der Fresnellinse sitzt, damit der Einfallswinkel auf diese Linse nicht zu groß wird. Dies wiederum bedingt eine Mindestbauhöhe, die einen solchen Durchlicht-Schreibprojektor zu einem ziemlich voluminösen Gerät macht. Es sind daher bereits zahlreiche Vorschläge gemacht worden, diese Bauhöhe zu reduzieren und Projektoren zu schaffen, die weniger Platz benötigen.

Diese Vorschläge laufen darauf hinaus, die Lichtquelle seitlich kurz unterhalb der Fresnellinse anzuordnen und den Strahlengang über einen Umlenkspiegel von unten zur Fresnellinse und zur Schreibplatte zu reflektieren. Ein solcher Projektor ist zum Beispiel offenbart in der japanischen Patentschrift Nr. 55-60934.

Zur weiteren Verringerung der Bauhöhe ist es aus dem US-PS 4 118 761 auch bereits bekannt, bei seitlich stehender Lichtquelle unterhalb der Fresnellinse eine mit parallelen Prismenleisten besetzte Reflexionsfläche derart anzuordnen, daß die Strahlen von ihr in einem parallelen Strahlengang zur Fresnellinse geleitet werden.

Die Erfindung geht von diesem Stand der Technik aus. Ihr liegt die Aufgabe zugrunde, einen Durchlicht-Schreibprojektor zu shaffen, dessen Bauhöhe noch weiter reduziert ist.

Diese Aufgabe ist durch einen Durchlicht-Schreibprojektor mit einem Beleuchtungsteil gelöst, das die in Anspruch 1 angegebenen Merkmale aufweist.

Der bei der Lösung der Aufgabe beschrittene Lösungsweg besteht darin, den Prismenwinkel der aus dem Stand der Technik bekannten Prismenleisten derart individuell zu bestimmen, daß die reflektierten Strahlen der Lichtquelle scheinbar von einer weit unterhalb der Reflexionsfläche zentral angeordneten Lichtquelle ausgehen, und die Reflexionsfläche in Längsrichtung der Prismenleisten zu krümmen, wobei der Prismenwinkel jeder Prismenleiste individuell an diese Krümmung angepaßt ist.

Auf diese Weise wird noch mehr Raum eingespart, so daß die Bauhöhe des Beleuchtungsteiles wesentlich vermindert werden kann und nur noch von demjenigen Abstand zur Fresnellinse bestimmt wird, der erforderlich ist, um ausreichend Licht vn der Lichtquelle zur Reflexionsfläche fallen zu lassen.

Aber auch dieser Abstand kann noch verkleinert werden, wenn man nämlich nicht nur eine sondern zwei Lichtquellen verwendet, und diese Lichtquellen seitlich symmetrisch zur Reflexionsfläche anordnet. Diese beiden Lichtquellen können dann naturgemäß kleiner sein, als wenn nur eine solche verwendet wird und trotzdem den gleichen Lichtstrom liefern. Die Prismenleisten müssen dann, von der durch die optische Achse des Gerätes definierten mittleren Ebene ausgehend, mit ihrem Prismenwinkel symmetrisch zu den Lichtquellen angeordnet werden.

Die Prismenleisten können dabei sowohl an der Oberseite als auch an der Unterseite der Reflexionsfläche angebracht sein, wie dies auch bereits in der DE-AS 1 153 915 beschrieben ist.

Um beim Einfall der Lichtstrahlen auf die Prismenleisten allen Abschattungen vorzubeugen, wird zusätzlich noch vorgeschlagen, die Reflexionsfläche nicht als ebene Fläche auszubilden, sondern sie in Längsrichtung der Prismenleisten durchzubiegen. Diese Durchbiegung kann in der konkreten Durchführung mehrere Formen haben. Die Reflexionsfläche kann nach der einen oder auch nach der anderen Seite durchgebogen sein. In dem einen Falle (konkav zur Schreibplatte) bildet sie den Teil eines Hohlzylinders, auf dessen Innenseite die Prismenleisten verlaufen; im anderen Falle (konvex zur Schreibplatte) stellt sie die Wandung eines quasi Vollzylinders dar, auf dessen Außenseite die Prismenleisten angeordnet sind.

Die Krümmung der Reflexionsfläche muß auch durchaus nicht immer stetig sein (wobei die Fläche dann im Querschnitt Teil eines Kreisbogens ist), sie kann vielmehr auch unstetig sein, z.B. an den Enden stärker gekrümmt sein als in der Mitte.

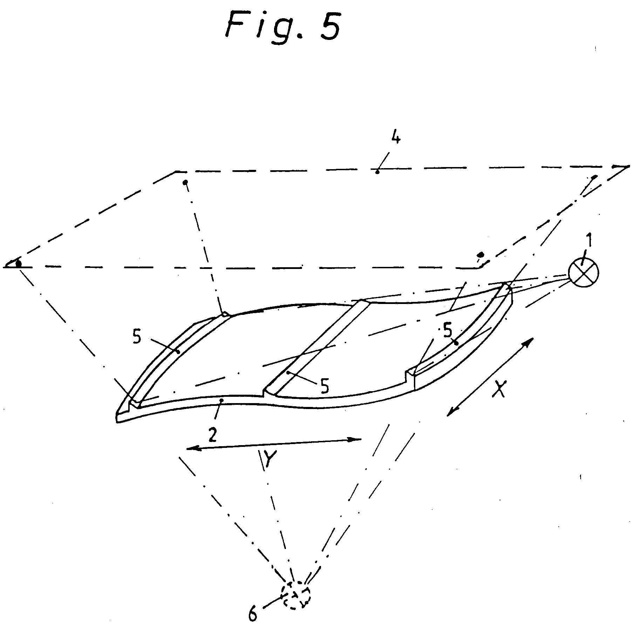

Schließlich kann die Reflexionsfläche zusätzlich zu ihrer Krümmung in Richtung der Prismenleisten auch noch in Richtung senkrecht zu den Prismenleisten gekrümmt sein. Die genaue Art dieser Krümmung kann einem der speziellen Ausführungsbeispiele entnommen werden (Fig. 5).

Immer aber verlaufen die Prismenleisten in Richtung der einen Krümmung, und die Lichtquelle, vorzugsweise die beiden symmetrisch angeordneten Lichtquellen, stehen auf den Stirnseiten des Hohl- bzw. Vollzylinders.

Zwischen der Art und dem Ausmaß der Krümmung einerseits und den Prismenwinkeln der verschiedenen Prismenleisten andererseits besteht eine enge Beziehung. Die Prismenwinkel aller Leisten müssen individuell zu einem solchen Wert bestimmt werden, daß die Lichtstrahlen in ihrer Gesamtheit von einer weit unterhalb der Fresnellinse bzw. der Schreibplatte stehenden imaginären, virtuellen Lichtquelle zu kommen scheinen.

In der Zeichnung ist die Erfindung in zwei Ausführungsbeispielen dargestellt. Es zeigen:
- Fig. 1: schematisch die Reflexionsfläche eines bekannten Durchlicht-Schreibprojektors mit an der Oberfläche angeordneten Prismenleisten,
- Fig. 2: schematisch die Reflexionsfläche eines Durchlicht-Schreibprojektors mit an der Unterseite angeordneten Prismenleisten,
- Fig. 3: schematisch den Beleuchtungsteil eines DurchlichtSchreibprojektors mit gekrümmter Reflexionsfläche,
- Fig. 4: eine Ansicht der Fig.3 um 90° gedreht,
- Fig. 5: schematisch den Beleuchtungsteil eines Durchlicht-Schreibprojektors mit einer in sich verwundenen Reflexionsfläche.

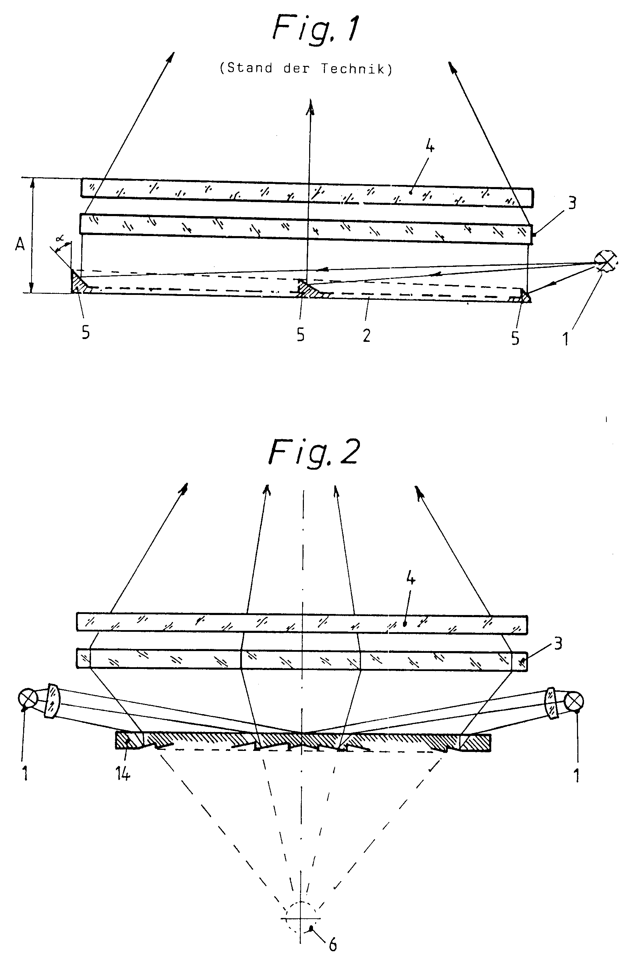

In Fig.1 ist das Prinzip der erfundenen Reflexionsfläche in einfachster Weise schematisch dargestellt. Mit 1 ist die Lichtquelle bezeichnet, von der Strahlen auf die Reflexionsfläche 2 fallen. Von dort aus werden sie zu einer Fresnellinse 3 reflektiert und gelangen durch die Schreibplatte 4 hindurch in das nicht mehr dargestellte Projektionsobjektiv.

Die Reflexionsfläche 2 ist an der Oberfläche mit Prismenleisten 5 besetzt, die senkrecht zur Zeichenebene verlaufen, so daß die Prismen in der Figur im Querschnitt erscheinen. Die der Lichtquelle 1 zugekehrten Prismenflächen sind verspiegelt, und die Prismenwinkel sind bei jeder Leiste individuell in der Weise errechnet, daß die verspiegelten Prismenflächen die auf sie einfallenden Strahlen in der gezeigten Weise zur Fresnellinse 3 reflektieren.

Aus Fig.1 läßt sich auch das Prinzip der erfundenen Reflexionsfläche am besten erkennen, das darin besteht, daß der bei den Geräten nach dem Stand der Technik vorhandene große Umlenkspiegel in einzelne Streifen, die Prismenleisten, zerlegt ist, so daß die Bauhöhe A auf ein Minimum reduziert werden kann.

Es ist einleuchtend, daß bei Verwendung von zwei Lichtquellen 1, nämlich eine auf jeder Seite, die Prismenleisten von der Mitte ausgehend mit ihren reflektierenden Prismenflächen symmetrisch den jeweiligen Lichtquellen zugekehrt sind und auch die Prismenwinkel von außen nach innen (bzw. umgekehrt) symmetrisch gleich abgestuft sind.

Ein solches Ausführungsbeispiel ist in Fig.2 gezeigt, und zwar am Beispiel einer Reflexionsfläche 14, bei der die Prismenleisten 5 an der Unterseite der Reflexionsfläche angeordnet sind. Dabei treten die Lichtstrahlen durch die entspiegelte Oberseite der Reflexionsfläche ein und treffen an der Unterseite auf die von außen verspiegelten Prismenleisten 5, deren Prismenwinkel α bei jeder Leiste derart individuell bestimmt ist, daß die dort reflektierten Strahlen alle von einer gemeinsamen, unterhalb der Fresnellinse 3 angeordneten Lichtquelle 6 zu kommen scheinen.

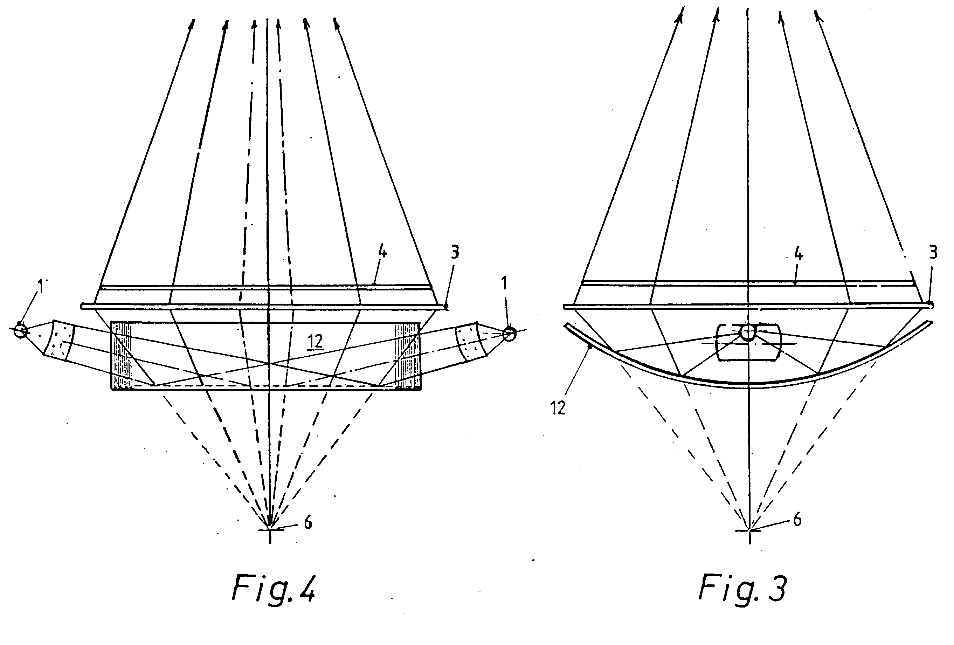

In den Fig. 3 und 4 ist ein Ausführungsbeispiel mit einer gebogenen Reflexionsfläche 12 dargestellt, bei der die Prismenleisten 5 entsprechend dem in Fig.1 gezeigten Beispiel an der Oberseite der Reflexionsfläche angebracht sind. Wie bereits erwähnt, dient die Durchbiegung der Reflexionsfläche dazu, Abschattungen im Strahlengang zu vermeiden und zusätzlich auch noch solche Strahlen zur Fresnellinse zu reflektieren, die bei einer ebenen Reflexionsfläche nutzlos in die Umgebung abgestrahlt werden.

Mit 1 ist wiederum die Lichtquelle bezeichnet. 12 ist die durchgebogene Reflexionsfläche, über der die Fresnellinse 3 und die Schreibplatte 4 stehen. Von den Lichtquellen 1 sind zwei Stück vorhanden, von denen in Fig.3 jedoch nur die hintere sichtbar ist. Aus Fig.3 läßt sich die Durchbiegung der Reflexionsfläche 12 am besten erkennen. Dabei ist zu beachten, daß in dieser Ansicht der Blick auf die verspiegelte Prismenfläche einer Prismenleiste fällt. Es ist auch erkennbar, daß die Durchbiegung der Reflexionsfläche in Längsrichtung der Prismenleisten verläuft.

Fig.4 stellt eine um 90° gedrehte Ansicht dar. In ihr werden die beiden Lichtquellen gezeigt, und die Durchbiegung der Reflexionsfläche 12 ergibt sich aus dem nach hinten ansteigenden Verlauf dieser Fläche.

In Fig.5 ist eine in sich verwundene Reflexionsfläche 2 dargestellt. Diese Reflexionsfläche ist sowohl in Richtung der Prismenleisten 5 (= x-Richtung) als auch in der dazu senkrechten Richtung (= y-Richtung) gekrümmt. Dabei ist die Krümmung in der y-Richtung nicht etwa stetig sondern diese Krümmung ist unstetig und ändert sich von konkav (= rechter Teil der Fläche) über Null (= mittlere Prismenleiste) zu konvex (= linker Teil der Fläche).

Abschließend sei nochmals ausdrücklich darauf aufmerksam gemacht, daß die gezeigten Arten der Durchbiegung der Reflexionsfläche lediglich als mögliche Beispiele für die Durchbiegung gewählt sind. Der Kurvenverlauf der Durchbiegung (kreisförmig, hyperbolisch, konvex oder konkav, und zusätzlich möglicherweise noch in sich verwunden = Fig.5) ist frei wählbar. Auf den Zusammenhang zwischen dem Durchbiegungs-Kurvenverlauf und den Prismenwinkeln wurde bereits hingewiesen. Die Prismenwinkel müssen stets so gewählt werden, daß die Lichtstrahlen scheinbar von der zentral unterhalb der Fresnellinse 3 angeordneten Lichtquelle 6 zu kommen scheinen.

## Patentansprüche

1. Durchlicht-Schreibprojektor mit einer Fresnellinse (3) mit Schreibauflage (4), einer unterhalb der Fresnellinse fest angeordneten Reflexionsfläche (2;12;14) und einem Beleuchtungsteil mit zwischen der Reflexionsfläche und der Fresnellinse seitlich liegender Lichtquelle (1), wobei die Reflexionsfläche mit zueinander parallel verlaufenden verspiegelten Prismenleisten (5) besetzt ist, deren Prismenwinkel (α) für jede Prismenleiste unterschiedlich und individuell bestimmt sind,
dadurch gekennzeichnet, daß
die Prismenwinkel (α) derart bestimmt sind, daß die zur Fresnellinse (3) reflektierten Strahlen der Lichtquelle (1) scheinbar von einer in der optischen Achse des Projektors unterhalb der Reflexionsfläche liegenden zentralen imaginären Lichtquelle (6) ausgehen, und daß die Reflexionsfläche in Längsrichtung der Prismenleisten (5) gekrümmt ist und der Prismenwinkel (α) jeder Prismenleiste (5) individuell dieser Krümmung angepaßt ist.

2. Durchlicht-Schreibprojektor nach Anspruch 1, dadurch gekennzeichnet, daß die Krümmung konkav zur Fresnellinse (3) verläuft.

3. Durchlicht-Schreibprojektor nach Anspruch 1, dadurch gekennzeichnet, daß die Krümmung konvex zur Fresnellinse (3) verläuft.

4. Durchlicht-Schreibprojektor nach einem der Ansprüche 2 oder 3, dadurch gekennzeichnet, daß die Krümmung der Reflexionsfläche stetig ist.

5. Durchlicht-Schreibprojektor nach einem der Ansprüche 2 oder 3, dadurch gekennzeichnet, daß die Krümmung der Reflexionsfläche unstetig ist.

6. Durchlicht-Schreibprojektor nach einem der Ansprüche 2 - 5, dadurch gekennzeichnet, daß die Reflexionsfläche zsätzlich zur Krümmung in Richtung der Prismenleisten auch noch in der dazu senkrechten Richtung gekrümmt ist.

7. Durchlicht-Schreibprojektor nach Anspruch 6, dadurch gekennzeichnet, daß die zusätzliche Krümmung eine stetige Krümmung ist.

8. Durchlicht-Schreibprojektor nach Anspruch 6, dadurch gekennzeichnet, daß die zusätzliche Krümmung eine unstetige Krümmung ist und sich von konkav über Null zu konvex erstreckt.

## Claims

1. Overhead writing projector comprising a fresnel lens (3) with a writing support (4), a reflection surface (2; 12; 14) fixedly arranged below the fresnel lens, and an illuminating component with a light source (1) laterally disposed between the reflection surface and the fresnel lens, wherein the reflection surface is occupied by reflectively coated prism strips (5) which extend parallel to one another and the prism angles (α) of which are different for each prism strip and individually determined, characterised thereby that the prism angles (α) are determined in such a manner that the rays of the light source (1), which are reflected to the fresnel lens (3), apparently derive from a central imaginary light source (6) disposed in the optical axis of the projector and below the reflection surface, and that the reflection surface is curved in the longitudinal direction of the prism strips (5) and the prism angle (α) of each prism strip (5) is individually matched to this curvature.

2. Overhead writing projector according to claim 1, characterised thereby that the curvature extends concavely relative to the fresnel lens (3).

3. Overhead writing projector according to claim 1, characterised thereby that the curvature extends convexly relative to the fresnel lens (3).

4. Overhead writing projector according to one of claims 2 or 3, characterised thereby that the curvature of the reflection surface is constant.

5. Overhead writing projector according to one of claims 2 or 3, characterised thereby that the curvature of the reflection surface is variable.

6. Overhead writing projector according to one of claims 2 to 5, characterised thereby that the reflection surface is curved, in addition to the curvature in the direction of the prism strips, also in the direction perpendicular thereto.

7. Overhead writing projector according to claim 6, characterised thereby that the additional curvature is a constant curvature.

8. Overhead writing projectior according to claim 6, characterised thereby that the additional curvature is a variable curvature and extends from concave through zero to convex.

## Revendications

1. Projecteur de document à lumière transversante, comportant une lentille de Fresnel (3), une plaque porte-document (4), une surface réfléchissante (2, 12, 14) disposée fixe sous la lentille de Fresnel et un dispositif d'éclairage avec une source de lumière (1) disposée latéralement entre la surface réfléchissante et la lentille de Fresnel, ladite surface réfléchissante étant garnie de réglettes prismatiques (5) réfléchissantes qui s'étendent parallèlement entre elles et dont les angles des prismes (α) sont différents et déterminés individuellement pour chacune des réglettes prismatiques, caractérisé en ce que les angles (α) des prismes sont déterminés de telle manière que les rayons lumineux en provenance de la source de lumière (1), réfléchis vers la lentille Fresnel (3) semblent provenir d'une source de lumière (6) imaginaire disposée sur l'axe optique du projecteur en dessous de la surface réfléchissante et en ce que ladite surface réfléchissante a une courbure dans le sens longitudinal des réglettes prismatiques (5) et en ce que l'angle du prisme (α) de chaque réglette prismatique (5) est ajusté individuellement en fonction de cette courbure.

2. Projecteur de document à lumière traversante selon la revendication 1, caractérisé en ce que la courbure est concave, vue de la lentille de Fresnel (3).

3. Projecteur de document à lumière traversante selon la revendication 1, caractérisé en ce que la courbure est convexe, vue de la lentille de Fresnel (3).

4. Projecteur de document à lumière traversante selon l'une quelconque des revendications 2 ou 3, caractérisé en ce que le rayon de courbure de la surface réfléchissante est, constant.

5. Projecteur de document à lumière traversante selon l'une quelconque des revendications 2 ou 3, caractérisé en ce que le rayon de courbure de la surface réfléchissante est variable.

6. Projecteur de document à lumière traversante selon l'une quelconque des revendications 2 à 5, caractérisé en ce que la surface réfléchissante, en plus de sa courbure dans le sens des réglettes prismatiques, présente également une courbure dans la direction perpendiculaire à la précédente.

7. Projecteur de document à lumière traversante selon la revendication 6, caractérisé en ce que la courbure complémentaire a un rayon de courbure constant.

8. Projecteur de document à lumière traversante selon la revendication 6, caractérisé en ce que la courbure complémentaire a un rayon de courbure variable et en ce que sa courbure passe ainsi d'une forme concave à une forme convexe en passant par zéro.
